(19) **Europäisches Patentamt**
**European Patent Office**
**Office européen des brevets**

(11) **EP 4 139 919 B1**

(12) **EUROPEAN PATENT SPECIFICATION**

(45) Date of publication and mention
of the grant of the patent:
**30.10.2024 Bulletin 2024/44**

(21) Application number: **21721487.3**

(22) Date of filing: **23.04.2021**

(51) International Patent Classification (IPC):
**G10L 19/26** $^{(2013.01)}$    **G10L 25/51** $^{(2013.01)}$

(52) Cooperative Patent Classification (CPC):
**G10L 19/26; G10L 25/51;** Y02D 30/70

(86) International application number:
**PCT/EP2021/060643**

(87) International publication number:
**WO 2021/214280 (28.10.2021 Gazette 2021/43)**

(54) **LOW COST ADAPTATION OF BASS POST-FILTER**

KOSTENGÜNSTIGE ANPASSUNG DES BASS-NACHFILTERS

ADAPTATION À FAIBLE COÛT D'UN POST-FILTRE DE BASSES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.04.2020 US 202063014917 P**

(43) Date of publication of application:
**01.03.2023 Bulletin 2023/09**

(60) Divisional application:
**24201242.5**

(73) Proprietor: **Telefonaktiebolaget LM ERICSSON
(PUBL)
16483 Stockholm (SE)**

(72) Inventors:
• **MORADI ASHOUR, Chamran
167 45 Stockholm (SE)**
• **NORVELL, Erik
194 44 Upplands Väsby (SE)**

(74) Representative: **Ericsson
Patent Development
Torshamnsgatan 21-23
164 80 Stockholm (SE)**

(56) References cited:
**US-A1- 2012 101 824    US-A1- 2019 214 035**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates generally to communications, and more particularly to methods and apparatuses for mono, stereo or multi-channel audio encoding and decoding.

BACKGROUND

Although the capacity in telecommunication networks is continuously increasing, it is still of great interest to limit the required bandwidth per communication channel. In mobile networks smaller transmission bandwidths for each call yields lower power consumption in both the mobile device and the base station. This translates to energy and cost saving for the mobile operator, while the end user will experience prolonged battery life and increased talk-time. Further, with less consumed bandwidth per user, the mobile network can service a larger number of users in parallel.

In the field of speech coding, the ACELP (algebraic code-excited linear prediction) algorithm has been the leading technology in delivering high quality sound at low bit rates. In short, the ACELP model is composed of a linear predictor (LP) filter, which models the vocal tract and provides the coarse spectral shape of the reconstructed voice. The LP filter is driven by two codebooks: a pitch codebook (or adaptive codebook) which models the periodic component of the voice and an innovation codebook (or fixed codebook) which generates the non-periodic voice segments and also builds the pitch codebook. The core algorithm of the ACELP algorithm has been further enhanced, including post-processing tools such as post-filters. The two main such filters are the formant post-filter and the pitch-post filter, which both make use of parameters that are part of the ACELP speech model. The formant post-filter enhances the coarse spectral shape using the linear predictor filter (LP), and the pitch post-filter reduces inter-harmonic distortion by emphasizing the pitch period. A variant of the pitch post-filter, targeting the low frequency range, is the bass post-filter (BPF). This tool is present in recent speech codec standards, such as ITU-T G.718 and 3GPP EVS as illustrated in 3GPP TS 26.445 V16.0.0, Codec for Enhanced Voice Services (EVS); Detailed Algorithmic Description, 6.1.4.2 Bass post-filter [1].

Although the bass post-filter generally improves the quality of the decoded audio, it may have a negative impact on some signals. Several adaptation methods have been used to control the post-filter strength. In 3GPP EVS [1], the post-filter strength is adapted to how well the post-filtered signal correlates with the input signal. A low correlation suggests the filter may have a degrading impact, and as a result the filter output is attenuated. The post-filter strength is also adapted to the LP filter stability, where a low stability leads to an attenuated filter.

US 9,224,403 describes further adaptation methods of the bass post-filter. Here, US 9,224,403 has taken into consideration that the codec may use multiple modes, where the CELP or ACELP algorithm is one of these modes. Since the bass post-filter is only active for the ACELP mode, the strength of the bass post-filter may be adapted to avoid artefacts when enabling and disabling the filter in cases where there are frequent mode switches. U.S. patent 9,224,403 further considers how well the input signal is represented by the ACELP or CELP coding model. If there is significant energy loss, it is likely that the signal is not well modeled, and the bass post-filter may be harmful. To reduce the artefact from toggling the filter on and off, the post-filter strength may also be adapted gradually to give smoother transitions. The analysis of the filter impact may be done on a filter difference signal, describing the difference between the filtered and non-filtered signal. It may also be done on an approximate difference signal to reduce the computational complexity of the method.

In H. Chiba, et al "Adaptive Post-Filtering Controlled by Pitch Frequency for CELP-based Speech Coder", 2014 48th Asilomar Conference on Signals, Systems and Computers, it is recognized that the suitability of the bass post-filter may depend on the pitch, or fundamental frequency, of the signal. Here, the post-filter strength is limited as a function of the pitch, such that post-filter is attenuated for lower frequencies. The output of the filter is also low-pass filtered with a cut-off frequency that depends on the fundamental frequency, yielding lower operating bandwidth for lower fundamental frequencies.

US2019/214035 A1 discloses a decision whether to use the post filter taken separately from the decision as to the most suitable coding mode. This makes it possible to maintain one post filtering status throughout a period of such length that the switching will not annoy the listener. Thus, the encoding method may prescribe that the post filter will be kept inactive even though it switches into a coding mode where the filter is conventionally active. It also discloses as an option, wherein a decoding section extracts an intermediate decoded signal, whereby the approximate difference signal can be computed as the difference between the intermediate decoded signal and the intermediate decoded signal when subjected to post filtering.

US 2012/101824 A1 discloses a method for avoiding frame boundary discontinuities when performing pitch-based pre-filtering and pitch-based post-filtering of an audio signal is also described herein.

SUMMARY

The post-filters are intended to reduce noise, but in some cases they may introduce new artefacts. In particular, abrupt changes in the parameters, such as a pitch period parameter or post-filter strength, may introduce discontinuities that become audible in the low energy regions of the spectrum.

Gradual activation and deactivation, as suggested by US 9224 403 B2, does not address the fact that discontinuities may happen internally in the filter as an effect of switching parameters. Experience shows that attempts to smoothen the transitions of the parameter switches may lead to a slower filter adaptation, which reduces the performance of the post-filter while the artefacts are still not fully removed.

In one aspect there is provided a method for audio decoding, where an encoded primary signal is decoded to form a decoded primary signal, followed by a post-filtering of the decoded primary signal to form a post-filtered signal, where an output signal of the decoder is one of the decoded primary signal and the post-filtered signal. An energy estimation of at least a part of a frequency spectrum of the primary signal being reconstructed by the decoder and an analysis of discontinuities in time domain that is caused by the post-filtering of the decoded primary signal are obtained. A decision variable is generated based on the energy estimation and the analysis of discontinuities obtained. The decision variable is compared to a threshold and the output signal is set to be the decoded primary signal or the post-filtered signal based on the comparing of the decision variable to the threshold.

In another aspect there is provided a decoder adapted to perform operations comprising: obtaining an energy estimation of at least a part of a frequency spectrum of a primary signal being reconstructed by the decoder to form a decoded primary signal; obtaining an analysis of discontinuities in time domain that is caused by post-filtering of the decoded primary signal; generating a decision variable based on the energy estimation obtained and the analysis of discontinuities obtained; comparing the decision variable to a threshold; and setting the output signal to be the decoded primary signal or a post-filtered signal based on the comparing of the decision variable to the threshold.

In another aspect there is provided a computer program comprising program code to be executed by processing circuitry of a decoder, whereby execution of the program code causes the decoder to perform operations comprising: obtaining an energy estimation of at least a part of a frequency spectrum of a primary signal being reconstructed by the decoder to form a decoded primary signal; obtaining an analysis of discontinuities in time domain that is caused by post-filtering of the decoded primary signal; generating a decision variable based on the energy estimation obtained and the analysis of discontinuities obtained; comparing the decision variable to a threshold; and setting the output signal to be the primary signal decoded or a post-filtered signal based on the comparing of the decision variable to the threshold.

One advantage that may be obtained using the inventive concepts described herein is the addition of an adaptation of a post-filter such that the benefits of the post-filter are maintained, while the problematic cases are mitigated by attenuating or disabling the post-filter. Further, this advantage achieved by a low complex method which has a limited impact on the overall computational complexity of the audio decoder.

BRIEF DESCRIPTION OF THE DRAWINGS

The accompanying drawings, which are included to provide a further understanding of the disclosure and are incorporated in and constitute a part of this application, illustrate certain non-limiting embodiments of inventive concepts. In the drawings:

Figure 1 is a diagram illustrating an example of a decoder system operating in a network according to some embodiments;
Figure 2 is a block diagram illustrating an example of a decoder with a pitch post-filter according to some embodiments;
Figure 3 is an illustration of discontinuities that may appear at the subframe boundaries in a pitch post-filter adjustment signal;
Figure 4 is an illustration of power spectra of a signal before and after applying the pitch post-filter called "bass post-filter (BPF)";
Figure 5 is a diagram illustrating a decoder with a pitch post-filter, where the decoder reconstructs the signal in frequency domain according to some embodiments;
Figure 6 is a block diagram of the elements of an adaptive post-filter according to some embodiments of inventive concepts;
Figure 7 is a block diagram illustrating elements of the adaptive post-filter according to some embodiments of inventive concepts;
Figure 8 is a flowchart illustrating operations performed by an adaptive post-filter according to some embodiments of inventive concepts;
Figure 9 is a block diagram illustrating the elements of an alternative adaptive post-filter according to some embodiments of inventive concepts;

Figure 10 is a block diagram illustrating a decoder according to some embodiments of inventive concepts;

Figure 11 is a flow chart illustrating operations of a decoder according to some embodiments of inventive concepts;

Figure 12 is a flow chart illustrating operations of a decoder according to some embodiments of inventive concepts;

Figure 13 is a flow chart illustrating operations of a decoder according to some embodiments of inventive concepts;

## DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

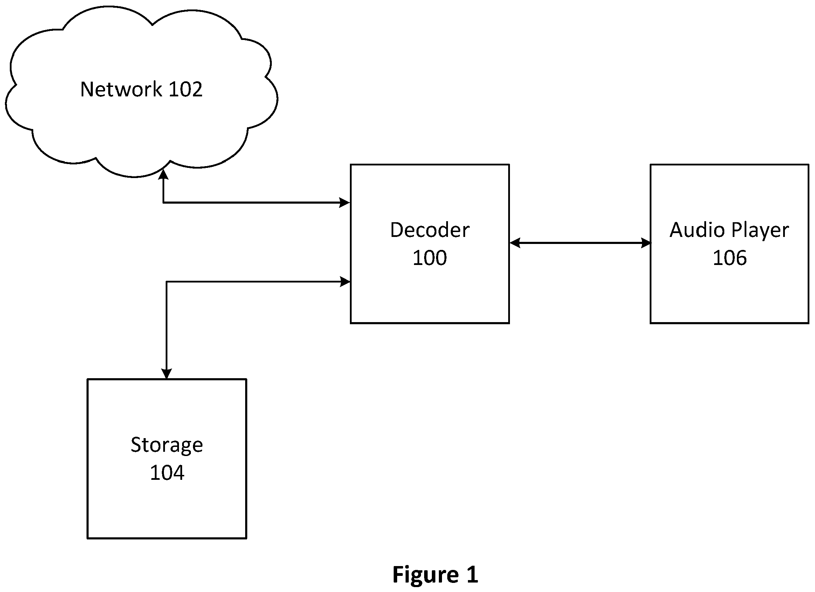

Figure 1 illustrates an example of an operating environment of a decoder 100 that may be used to decode mono, stereo or multi-channel bitstreams as described herein. The decoder 100 may be part of a media player, a mobile device, a set-top device, a desktop computer, and the like. The decoder 100 receives encoded bitstreams. The bitstreams may be sent from an encoder, from a storage device 104, from a device on the cloud via network 102, etc. During operation, decoder 100 receives and processes the frames of the bitstream as described herein. The decoder 100 outputs audio signals (e.g., mono, stereo or multi-channel audio signals) and transmits the audio signals to an audio player 106 having at least one loudspeaker for playback of mono, stereo or multi-channel audio signals. Storage device 104 may be part of a storage depository of mono, stereo or multi-channel audio signals such as a storage repository of a store or a streaming music service, a separate storage component, a component of a mobile device, etc. An audio player may be a Bluetooth speaker, a device having at least one loudspeaker, a mobile device, a streaming music service, etc.

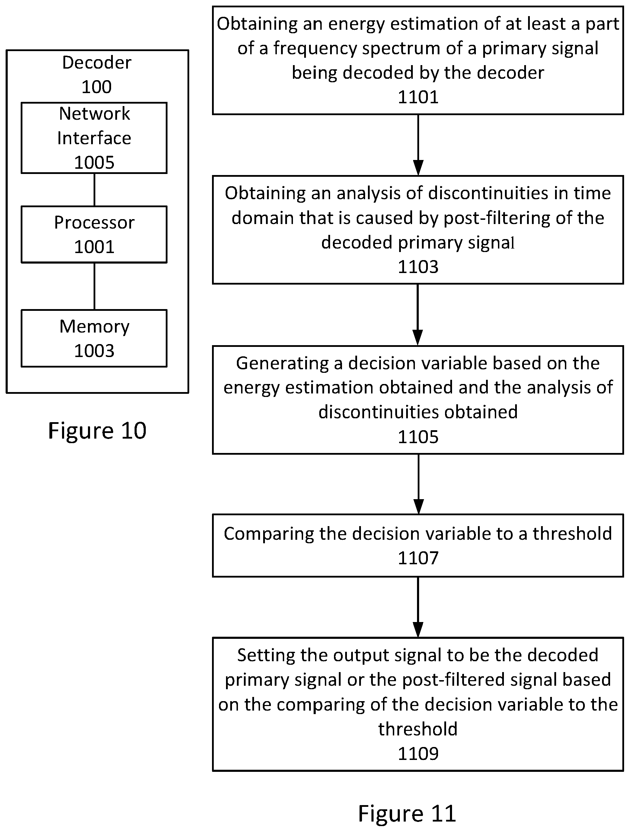

Figure 10 is a block diagram illustrating elements of a decoder device 100 configured to provide wireless communication according to embodiments of inventive concepts. A decoder 100 may be part of a mobile terminal, a mobile communication terminal, a wireless communication device, a wireless terminal, a wireless communication terminal, user equipment, UE, a user equipment node/terminal/device, etc. As shown, decoder 100 may include a network interface circuit 1005, also referred to as a network interface, configured to provide communications with other devices/entities/functions/etc. The decoder 100 may also include a processor circuit 1001, also referred to as a processor, operatively coupled to the network interface circuit 1005, and a memory circuit 1003, also referred to as memory, operatively coupled to the processor circuit. The memory circuit 1003 may include computer readable program code that when executed by the processor circuit 1001 causes the processor circuit to perform operations according to embodiments disclosed herein.

According to other embodiments, processor circuit 1001 may be defined to include memory so that a separate memory circuit is not required. As discussed herein, operations of the decoder 100 may be performed by processor 1001 and/or network interface 1005. For example, processor 1001 may control network interface 1005 to transmit communications to multi-channel audio players and/or to receive communications through network interface 1005 from one or more other network nodes/entities/servers such as encoder nodes, depository servers, etc. Moreover, modules may be stored in memory 1003, and these modules may provide instructions so that when instructions of a module are executed by processor 1001, processor 1001 performs respective operations.

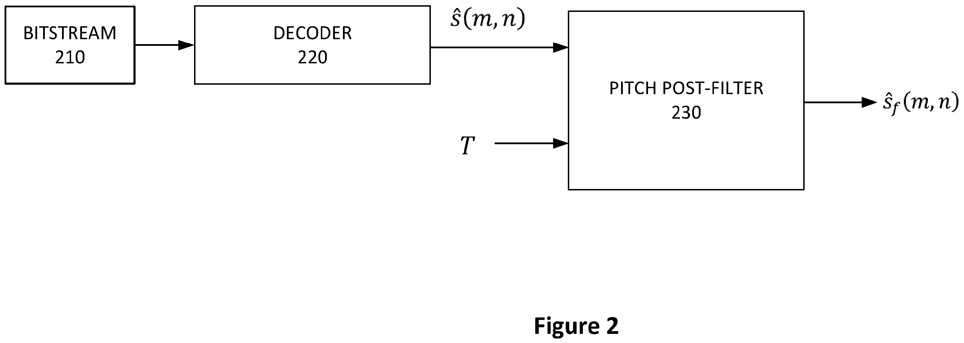

Figure 2 illustrates an audio decoding system including a pitch post-filter. The decoder 220 receives a bitstream 210 from e.g. a transmission network or a storage medium. The decoder generates a reconstructed time domain signal $\hat{s}(m, n)$ where $n$ is the sample index and $m$ is the frame number. The reconstructed time domain signal $\hat{s}(m, n)$ may also be referred to as a primary signal or a decoded primary signal in the description that follows. The reconstructed time domain signal $\hat{s}(m, n)$ is further enhanced by a pitch post-filter 230 which may also utilize a pitch period T.

The pitch period $T$ is obtained through pitch analysis done on the decoded audio, or it may come from an analysis in the encoder or decoder on the target signal or a related audio signal which may have the same or similar dominant pitch as the post-filter input signal.

The post-filtered signal $\hat{s}_f(m, n)$ may be derived using a pitch post-filter of the form:

$$\begin{cases} \hat{s}_f(m, n) = (1 - \alpha)\hat{s}(m, n) + \alpha s_p(m, n) \\ s_p(m, n) = 0.5\hat{s}(m, n - T) + 0.5\hat{s}(m, n + T) \end{cases}$$

where $T$ is the fundamental pitch period in samples and $\alpha \in [0, 0.51$ controls the post-filter strength. An equivalent expression for the post-filtered signal is

$$\hat{s}_f(m, n) = \hat{s}(m, n) + \alpha \left( s_p(m, n) - \hat{s}(m, n) \right) =$$

$$\hat{s}(m, n) - \alpha \left( \hat{s}(m, n) - s_p(m, n) \right) = \hat{s}(m, n) - s_{diff}(m, n)$$

where $s_{diff}(m, n) = \alpha(\hat{s}(m, n) - s_p(m, n))$ is the impact of the filter expressed as a negative difference signal or a correction signal or an error signal. The parameters $\alpha$ and $T$ are typically updated each subframe, where a subframe may be 4 or 5 ms long. If the full audio frame is 20 ms, this means that the full frame is divided into 5 or 4 subframes respectively. In 3GPP EVS [1], the post-filter strength $\alpha$ is adapted based on the spectral stability of the signal. It also has a built-in failsafe mechanism by measuring the correlation with the post-filtered audio with the input signal. If the correlation is low, it means the filter is likely to have a negative impact on the quality and the filter is dampened or switched off.

The post-filtered signal $\hat{s}_f(m, n)$ is output from the decoder system to be played back by an audio player or potentially stored or transmitted in a decoded PCM format. Note that the decoder system may include further processing of the post-filtered signal before the final signal is output, such as additional enhancements or combinations with other signals or signal components. The reconstructed signal may in such cases correspond to a difference signal, or residual signal, as outlined in ITU-T G.718 "Frame error robust narrow-band and wideband embedded variable bit-rate coding of speech and audio from 8-32 kbit/s", section 7.14.1.2 Dual bass post-filter. The residual signal may be combined with another signal to provide an enhanced output signal.

**Bass post-filter adaptation - Embodiment A**

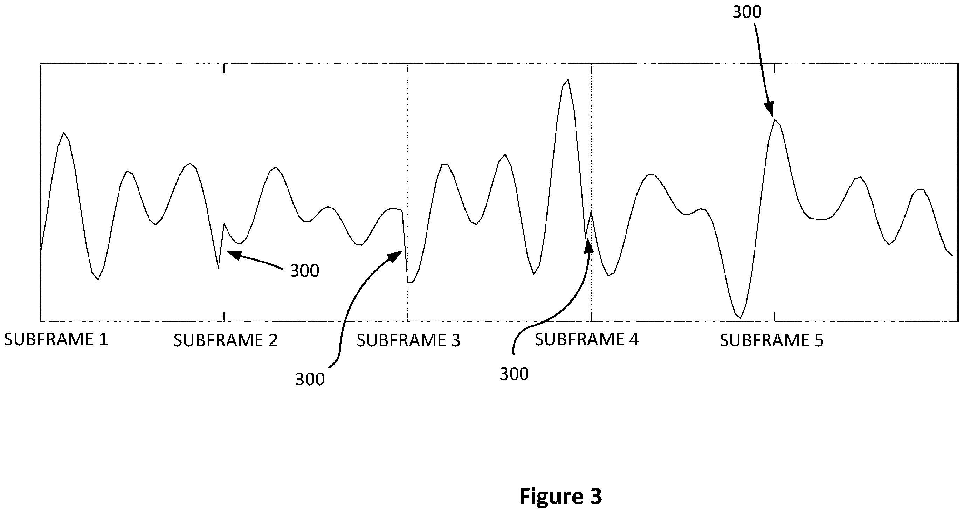

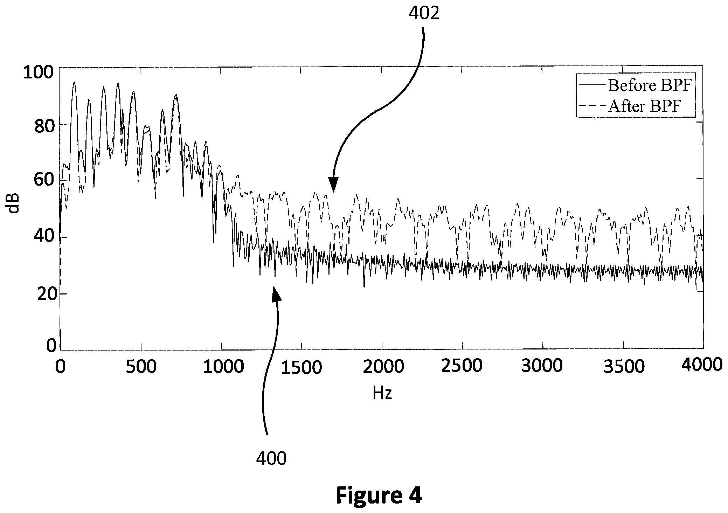

A drawback with the bass post-filter of Figure 2 is that the abrupt change of the bass post-filter parameters at the subframe boundary may cause undesired discontinuities in the filtered signal, as illustrated by the discontinuities 300 in Figure 3. These discontinuities may give distortions that spread across the frequency range. Depending on the spectrum of the input signal, these distortions may be noticeable and become disturbing. Consider e.g. the spectra 400 in Figure 4, where the post-filter operation generates audible noise 402 above approximately 1 kHz. Note that the filter still has the desired effect below 200 Hz, where the inter-harmonic distortion is reduced.

The failsafe mechanism of the filter, which measures the correlation of the filter output with the filter input signal, does not address the problem of the subframe transitions. Since the correlation is computed within each subframe, the transitions between subframes and their potential impact has not been considered.

A possible technique to reduce the effects of the discontinuities is to apply smoothing through low-pass filtering the parameters or by cross-fading the post-filter output between subframes. Although such operations were found to reduce the artefacts, the operations also slowed down the adaptation of the filter such that the positive effects of the filter were reduced. Further, even though the low-pass filtering of the parameters reduced the artefacts, switching the post-filter off for these critical segments was found to be better. Hence, it seems desirable to keep the post-filter untouched for the regions where it has a positive impact while it should be switched off completely when it has a negative impact. An adaptation of the post-filter which can anticipate the distortions and disable the filter whenever needed can reduce and, in some embodiments, eliminate the effects of discontinuities.

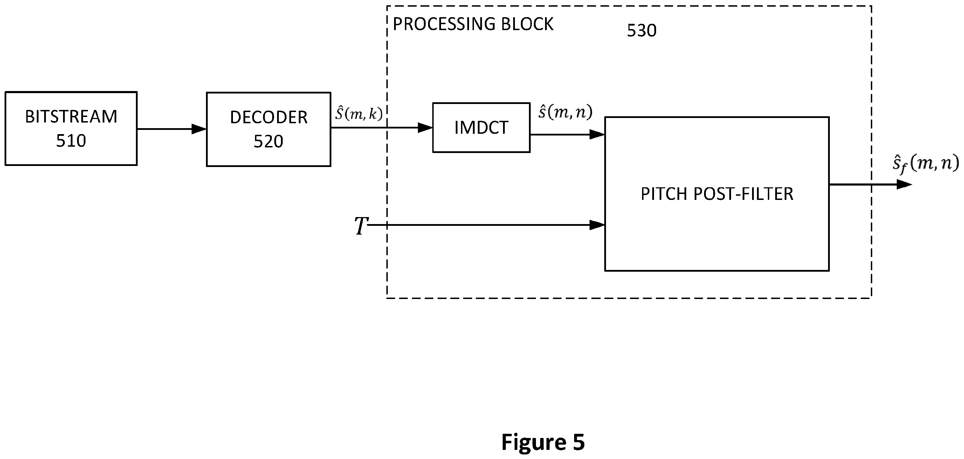

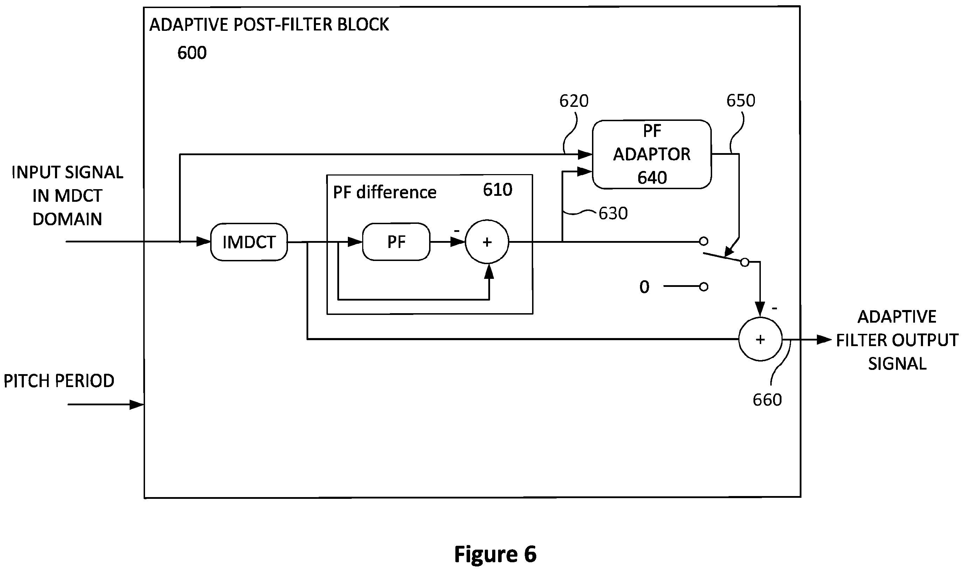

The decoder as outlined in Figure 5 provides such an adaptation. The decoder 520 receives a bitstream 510 and produces a reconstructed signal $S(m, k)$ in frequency domain where $m$ is the frame number and $k$ is the frequency bin index. A transform which is often used in audio encoder and decoder systems is MDCT (modified discrete cosine transform). It should be noted that the concepts presented herein are applicable for any transform domain where energy calculations are possible, such as DFT (discrete Fourier transform), QMF (quadrature mirror filterbank) or a Hybrid QMF filterbank. The processing block 530 performs the inverse MDCT (IMDCT) transform and applies the post-filter. A post-filter adaptation method according to some embodiments of inventive concepts can be described by substituting the processing block 530 of Figure 5 with the adaptive post-filter block 600 of Figure 6. The reconstructed signal 620 in frequency domain $S(m, k)$ is transformed to time domain. The resulting time domain signal is input to a post-filter difference generating block 610. The post-filter difference $s_{diff}(m, n)$ 630 and the reconstructed signal $S(m, k)$ 620 in frequency domain are input to the post-filter adaptor 640, which forms a decision 650 whether or not the post-filter should be applied. The decision 650 is used to control the output 660 of the adaptive post-filter block by activating or deactivating subtraction of the post-filter difference from the reconstructed primary signal.

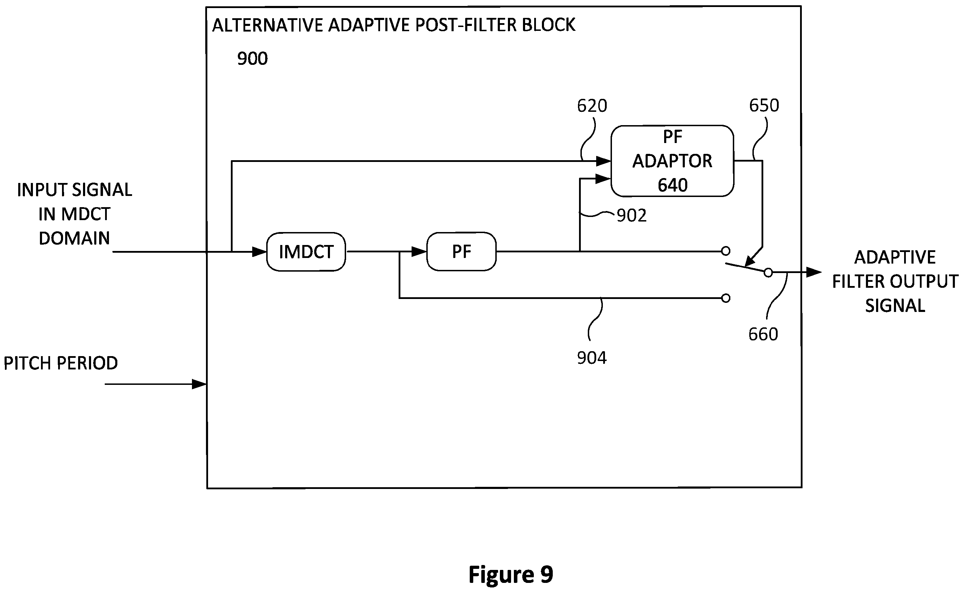

An alternative method, where the post-filter outputs the filtered signal rather than the filter difference signal is shown in Figure 9. Here, the decision mechanism of alternative adaptive post-filter block 900 decides whether to use the filtered signal 902 or the non-filtered signal 904. The time domain analysis of the filtered signal is performed on the filtered signal 902 instead of the difference signal, which will obtain similar results.

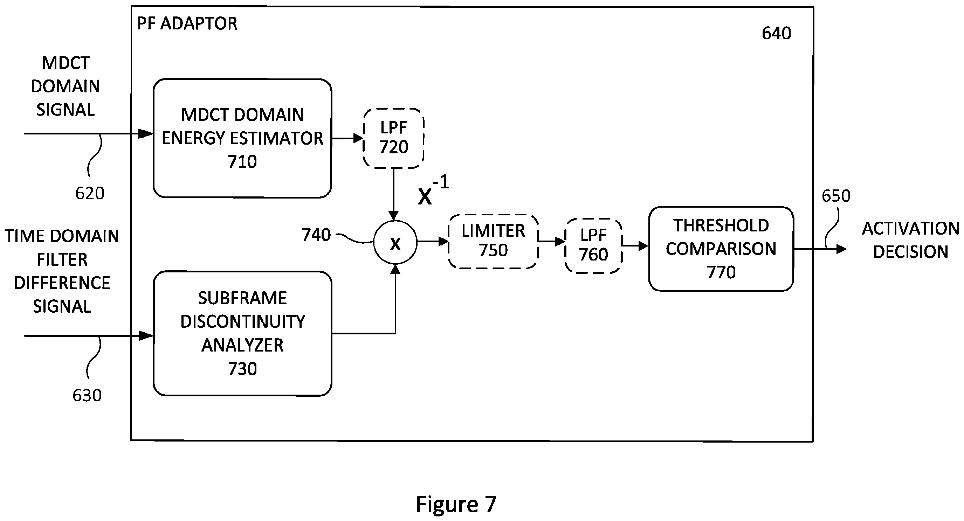

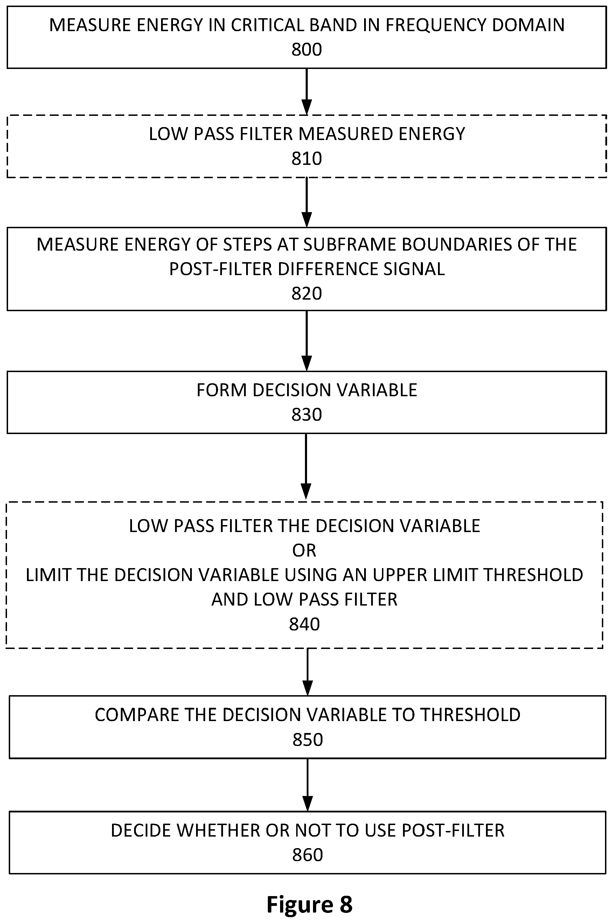

The post-filter adaptor 640 of Figure 6 can be further described by the elements of Figure 7 that perform the steps outlined in Figure 8. Based on the analysis of the problematic items as illustrated in Figure 3 and Figure 4, a post-filter adaptation method may be based on detecting two conditions:

1. The spectrum has a strong tilt or a deep valley which may expose the potential distortion of a post-filter as illustrated in Figure 4 where the signal 400 has a valley starting near 1000 Hz where the distortion 402 from the post filter is exposed, and

2. the discontinuities at the subframe boundaries are large as illustrated in Figure 3 by discontinuities 300.

Detecting a strong tilt or a deep valley in the spectrum may be done by measuring the energy of the spectrum in a certain critical band. A low energy in the critical band could then indicate that a deep valley is found in a perceptually sensitive part of the spectrum. The energy measurement $E_{\hat{S}_{cb}}(m)$ for each frame $m$ may be done on the reconstructed signal $S(m, k)$ in MDCT domain. The MDCT domain energy estimator 710 performs block 800 by measuring the energy of the critical band.

$$E_{\hat{S}_{cb}}(m) = \frac{1}{k_{end} - k_{start} + 1} \sum_{k=k_{start}}^{k_{end}} \left( \hat{S}(m, k) \right)^2$$

The frequency bin limits $k_{start}$ and $k_{end}$ can be set to match the frequency range of the critical band. For example, if the MDCT frame length $N_{MDCT}$ = 160, the sampling rate is 8000 Hz and the critical frequency range is 1000 Hz - 1600 Hz, suitable values may be $k_{start}$ = 39 and $k_{end}$ = 64. For a strictly high-pass filtering operation, the upper limit should be 4000 Hz and $k_{end}$ = 160. In the description above, the critical band may be adaptive and e.g. depend on the reconstructed signal. The critical band could for instance be focused around an identified low energy region measured on a perceptual weighted spectrum. A perceptually weighted spectrum can be generated based on the spectrum of the reconstructed signal and transformed in frequency and level dimensions such that perceptually important regions are emphasized. An adaptive critical band can also take into consideration for which frequency range the post-filter may generate distortion.

Since the MDCT synthesis of S(m, $k$) may involve an overlap-add operation, it may be desirable to mimic the overlap-add in the energy estimation. This may be done by applying a low-pass FIR filter 720 in block 810 to the energy estimate:

$$\tilde{E}_{\hat{S}_{cb}}(m) = \gamma E_{\hat{S}_{cb}}(m) + (1 - \gamma)E_{\hat{S}_{cb}}(m - 1).$$

Here $\gamma$ E (0,1] is a low-pass filtering coefficient which e.g. depends on the shape of the MDCT synthesis windows and the length of the overlap. A suitable value may be $\gamma$ = 0.61.

The size of the discontinuities is measured by averaging the step at the subframe boundaries of the filter difference signal $s_{diff}(m, n)$ in block 820 using the subframe discontinuity analyzer 730:

$$\tilde{E}_{step}(m) = \frac{1}{N_{sf}} \sum_{i=1}^{N_{sf}} \left( s_{diff}(m, n_i) - s_{diff}(m, n_i - 1) \right)^2$$

Where $m$ denotes the frame number, i is the subframe number, $N_{sf}$ is the number of subframes and $n_1$, $n_2$, ..., $n_{N_{sf}}$ is the sample indices of the subframe boundaries marking the start of each new subframe. If the number of subframes $N_{sf}$ = 5 and the frame length $N$ = 160, the subframe boundary indices may be $n_1$ = 0, $n_2$ = 32, $n_3$ = 64, $n_4$ = 96, $n_5$ = 128. Note that for the first sample $n_1$ = 0, sample $s_{diff}(m, -1)$ would be referenced. However, this is the same sample as the last sample of the previous frame, $s_{diff}(m - 1, N - 1)$. In a practical implementation, this sample value would be stored in memory between frames.

A decision variable is formed at block 830 at multiplier 740 as the ratio between $\tilde{E}_{step}(m)$ and $\tilde{E}_{\hat{S}_{cb}}(m)$.

$$\tilde{E}_{ratio}(m) = \frac{\tilde{E}_{step}(m)}{\tilde{E}_{\hat{S}_{cb}}(m)}$$

Alternatively, in case the optional low-pass filtering step 810 is omitted, a decision variable is formed as the ratio between $\tilde{E}_{step}(m)$ and $E_{\hat{S}cb}(m)$, where $E_{\hat{S}cb}(m)$ is the energy estimate calculated in block 800.

To stabilize the decision, the $\tilde{E}_{ratio}(m)$ may be low-pass filtered by applying a low-pass filter 760 at block 840 between frames, e.g.

$$\tilde{E}_{ratio,LP}(m) = \beta \tilde{E}_{ratio}(m) + (1 - \beta)\tilde{E}_{ratio,LP}(m - 1)$$

where $\beta \in (0,1]$ is a low-pass filtering coefficient and a suitable value may be $\beta = 0.68$.

It may further be beneficial to limit the range of the low-pass filtered energy ratio in block 840 via limiter 750, in which case the expression may be written

$$\tilde{E}_{ratio,LP}(m) = \beta \tilde{E}_{ratio,1}(m) + (1 - \beta)\tilde{E}_{ratio,LP}(m - 1)$$

$$\tilde{E}_{ratio,1}(m) = \begin{cases} \tilde{E}_{ratio}(m), & \tilde{E}_{ratio}(m) \leq E_{ratio,lim} \\ E_{ratio,lim}, & \tilde{E}_{ratio}(m) > E_{ratio,lim} \end{cases}$$

where $E_{ratio,lim}$ would set an upper limit for the energy ratio and where a suitable value was found to be $E_{ratio,lim} = 2$. Note that when $\beta$ is 1, the energy ratio is no longer low-pass filtered.

The post-filter activation decision in various embodiments is taken by comparing the low-pass filtered energy ratio with the threshold at threshold comparator 770 in block 850 and determining whether or not to use (e.g., activate) the post-filter in block 860. In one embodiment of inventive concepts, the threshold $E_{thr}$ is set to 1.

$$D(m) = \begin{cases} active, & \tilde{E}_{ratio,LP}(m) < E_{thr} \\ inactive, & \tilde{E}_{ratio,LP}(m) \geq E_{thr} \end{cases}$$

where *active* indicates the post-filter is activated and *inactive* indicates the post-filter is disabled. It should be noted that if the optional block 840 is omitted, the decision variable $\tilde{E}_{ratio}(m)$, calculated in block 830, is compared with the threshold. As indicated above, when the post-filter is activated, the output of the post-filter subtracts the post-filter difference from the reconstructed primary signal. When the post-filter is inactive, the output of the post-filter is the reconstructed primary signal.

Note that a similar analysis of the discontinuities may be done on the filter output signal $\hat{s}_f(m, n)$ instead of the difference signal $s_{diff}(m, n)$, as illustrated in Figure 9. This would likely lead to different choices on e.g. the filter constants $\beta$, $\gamma$, $E_{ratio,lim}$ and $E_{thr}$, but the principles of the concepts described above would remain the same.

In some embodiments adding some hysteresis for the switching to reduce toggling may be useful if the low-pass filtered energy ratio is hovering around the threshold. One way to implement hysteresis is to have two thresholds: one for activation and one for deactivation. If the activation threshold is a bit higher than the deactivation threshold this creates a "dead zone" for the decision variable and reduces toggling if the variable is hovering around the threshold. Another way to implement hysteresis is to determine a count of the number of times the low-pass filtered energy ratio goes below (or alternatively, above) the threshold in a time period and activate (or deactivate) the post-filter after a predetermined number of times the low-pass filtered energy ratio goes below (or alternatively, above) the threshold in the time period.

In the embodiments described above, a critical band is used. In various other embodiments of inventive concepts, more than one critical band, corresponding to more than one spectral valley may be present. In one embodiment, the critical band selected to analyze is the most sensitive region and the decision whether or not to use the post-filter is performed for the selected critical band. In other embodiments, there could be multiple regions where the noise is just below the threshold for being noticeable, and combining many of these regions may result in a user hearing the noise while the analysis per region indicates the noise should not be noticeable. One way to account for this may be summing the contribution from several critical bands and deciding whether to set the output to be the primary signal or the post-filtered signal based on the embodiments described above. An alternative approach is to analyze the bands separately, and then disable the post-filter if the threshold is triggered for any one of the bands being analyzed.

**Embodiment B**

An alternative method for deciding if the noise will be masked is to compare the energy of the signal in the critical region before and after the post-filter. This alternative method was found to give similar results as the inventive concepts described under Embodiment A, but at the cost of higher delay and complexity. The energy of critical band of the reconstructed signal can be measured in time domain:

$$E_{\hat{s}_{cb}}(m) = \frac{1}{N} \sum_{n=0}^{N-1} \hat{s}_{cb}(m,n)^2$$

$$\hat{s}_{cb}(m,n) = f_{cb}(\hat{s}(m,n))$$

where $f_{cb}(\cdot)$ is a high-pass filter or a band-pass filter matching the critical band. Similarly, the energy of the critical band of the post-filtered reconstructed signal can be written

$$E_{s_f}(m) = \frac{1}{N} \sum_{n=0}^{N-1} s_{f,cb}(m,n)^2$$

$$s_{f,cb}(m,n) = f_{cb}\left(s_f(m,n)\right)$$

A decision $D(m)$ to activate or disable the post-filter for frame m can be formed by comparing the energy ratio of the critical band of the signals before and after applying the post-filter to a decision threshold $E_{thr}$ as illustrated below where active indicates the post-filter is activated and inactive indicates the post-filter is disabled. In one embodiment of inventive concepts, the threshold $E_{thr}$ is set to 1. In other words, when the energy above a certain cut-off frequency is higher after applying the post-filter, the energy increase is assumed to be caused by noise and the post-filter is disabled.

$$D(m) = \begin{cases} active, & \dfrac{E_{s_f}(m)}{E_{\hat{s}_{cb}}(m)} < E_{thr} \\ inactive, & \dfrac{E_{s_f}(m)}{E_{\hat{s}_{cb}}(m)} \geq E_{thr} \end{cases}$$

Disabling the post-filter for frame m can be implemented in some embodiments by using the decoded signal $\hat{s}(m, n)$ instead of the post-filtered version $\hat{s}_f(m, n)$. If the filter routine produces a filter difference signal $s_{diff}(m, n)$, the disabling of the filter can be implemented by skipping the subtraction of the filter difference signal from the decoded signal $\hat{s}(m, n)$.

In some embodiments it may be useful to add some hysteresis for the switching between the primary signal and the post-filtered signal to reduce toggling if the energy ratio is hovering around the threshold. One way to implement hysteresis is to have two thresholds: one for activation and one for deactivation. If the activation threshold is a bit higher than the deactivation threshold this creates a "dead zone" for the decision variable and reduces toggling if the variable is hovering around the threshold. Another way to implement hysteresis is to determine a count of the number of times the low-pass filtered energy ratio goes below (or alternatively, above) the threshold in a time period and activate (or deactivate) the post-filter after a predetermined number of times the low-pass filtered energy ratio goes below (or alternatively, above) the threshold in the time period.

Operations of the decoder 100 (implemented using the structure of the block diagram of Figure 10) will now be discussed with reference to the flow chart of Figure 11 according to some embodiments of inventive concepts. For example, modules may be stored in memory 1003 of Figure 3, and these modules may provide instructions so that when the instructions of a module are executed by respective communication device processing circuitry 1001, processing circuitry 1001 performs respective operations of the flow chart.

Turning now to Figure 11, in block 1101, the processing circuitry 1001 obtains an energy estimation of at least a part of a frequency spectrum of the primary signal being reconstructed, i.e., decoded, by the decoder 100. The primary signal reconstruction may be done in the frequency domain. The operations of block 1101 are analogous to the operations of block 800 described above. In various embodiments of inventive concepts, the processing circuitry 1001 may obtain the energy estimation by summing energy coefficients of the at least a part of the frequency spectrum in the frequency domain. For example, in some embodiments, the processing circuitry 1001 obtains the energy estimation by measuring an energy of a critical band of a reconstructed signal in accordance with

$$E_{\hat{S}_{cb}}(m) = \frac{1}{k_{end} - k_{start} + 1} \sum_{k=k_{start}}^{k_{end}} \left( \hat{S}(m,k) \right)^2$$

wherein $m$ is a frame number, $E_{\hat{S}_{cb}}(m)$ is an energy of a critical band of the reconstructed signal, $S(m, k)$ is a reconstructed signal, and frequency bin limits $k_{start}$ and $k_{end}$ are set to match a frequency range of critical band.

The processing circuitry 1001 may further process the measurement by applying a low-pass filter to the energy $E_{\hat{S}_{cb}}(m)$ of the critical band of the reconstructed signal in accordance with

$$\tilde{E}_{\hat{S}_{cb}}(m) = \gamma E_{\hat{S}_{cb}}(m) + (1 - \gamma) E_{\hat{S}_{cb}}(m - 1)$$

wherein $\gamma$ E (0,1] and is a low-pass filtering coefficient which depends on a shape of modified discrete cosine transform, MDCT, synthesis windows and a length of an overlap.

In block 1103, the processing circuitry 1001 obtains an analysis of discontinuities in time domain that is caused by post-filtering of the primary signal. The operations of block 1103 are analogous to the operations of block 820 described above. In various embodiments of inventive concepts, the processing circuitry 1001 may obtain the analysis of the discontinuities in time domain by measuring an average energy of a size of the discontinuities. For example, in some embodiments, the processing circuitry 1001 measures the average energy of the size of the discontinuities by averaging a step at subframe boundaries of a filter difference signal $s_{diff}(m, n)$ in accordance with

$$\tilde{E}_{step}(m) = \frac{1}{N_{sf}} \sum_{i=1}^{N_{sf}} \left( s_{diff}(m, n_i) - s_{diff}(m, n_i - 1) \right)^2$$

wherein $m$ is a frame number, $i$ is a subframe number, $\tilde{E}_{step}(m)$ is an average energy of the step at the subframe boundaries, $N_{sf}$ is a number of subframes and $n_1$, $n_2$, ..., $n_{Nsf}$ are sample indices of the subframe boundaries marking the start of each subframe.

In block 1105, the processing circuitry 1001 generates a decision variable based on the energy estimation obtained and the analysis of discontinuities obtained. The operations of block 1105 are analogous to the operations of block 830 described above. In various embodiments of inventive concepts, the processing circuitry 1001 may generate the decision variable in accordance with

$$\tilde{E}_{ratio}(m) = \frac{\tilde{E}_{step}(m)}{\tilde{E}_{\hat{S}_{cb}}(m)}$$

wherein $\tilde{E}_{ratio}(m)$ is an energy ratio between $\tilde{E}_{step}(m)$ and $\tilde{E}_{\hat{S}_{cb}}(m)$, $\tilde{E}_{step}(m)$ is an average energy of a step at subframe boundaries, $E_{\hat{S}_{cb}}(m)$ is a low-pass filtered energy $E_{\hat{S}_{cb}}(m)$ of a critical band of a reconstructed signal.

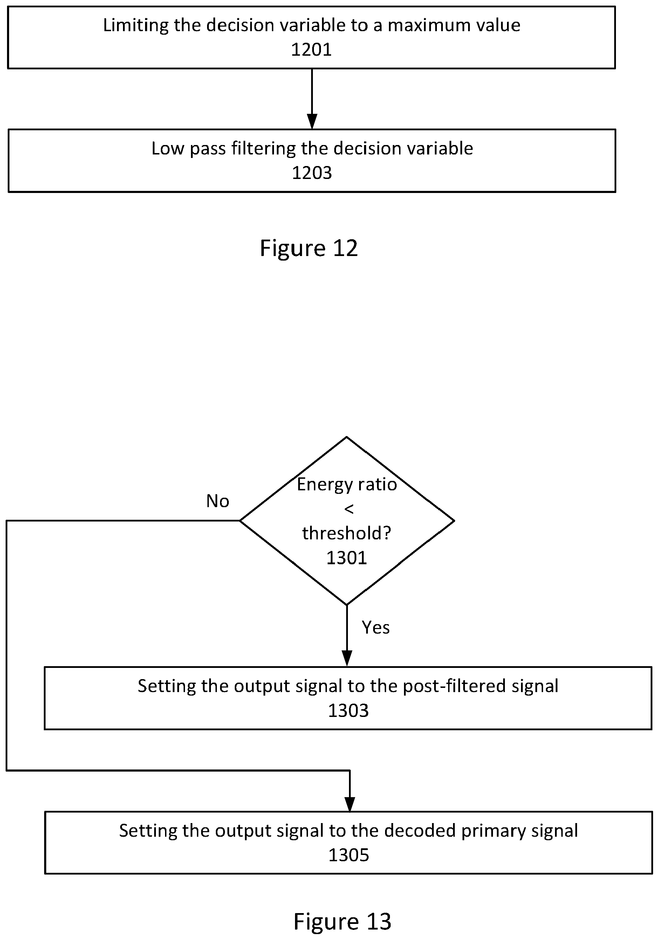

Turning to Figure 12, in some embodiments of inventive concepts, the processing circuitry 1001 may limit the decision variable to a maximum value in block 1201 and low pass filter the decision variable in block 1203. The operations of blocks 1201 and 1203 are analogous to the operations of block 840 described above. In some embodiments, the processing circuitry 1001 limits the decision variable and low pass filters the decision variable in accordance with

$$\tilde{E}_{ratio}(m) = \frac{\tilde{E}_{step}(m)}{\tilde{E}_{\hat{S}_{cb}}(m)}$$

$$\tilde{E}_{ratio,LP}(m) = \beta \tilde{E}_{ratio,1}(m) + (1 - \beta) \tilde{E}_{ratio,LP}(m - 1)$$

$$\tilde{E}_{ratio,1}(m) = \begin{cases} \tilde{E}_{ratio}(m), & \tilde{E}_{ratio}(m) \leq E_{ratio,lim} \\ E_{ratio,lim}, & \tilde{E}_{ratio}(m) > E_{ratio,lim} \end{cases}$$

wherein $m$ is a frame number, $\tilde{E}_{ratio}(m)$ is an energy ratio between $\tilde{E}_{step}(m)$ and $\tilde{E}_{\hat{S}_{cb}}(m)$, $\tilde{E}_{step}(m)$ is an average energy of a step at subframe boundaries, $\tilde{E}_{\hat{S}_{cb}}(m)$ is a low-pass filtered energy $E_{\hat{S}_{cb}}(m)$ of a critical band of a reconstructed signal, $\beta \in (0,1]$ is a low-pass filtering coefficient, and $E_{ratio,lim}$ is an upper limit for the energy ratio.

Returning to Figure 11, in block 1107, the processing circuitry 1001 compares the decision variable to a threshold. For example, as described above, when the decision variable is the energy ratio between $\tilde{E}_{step}(m)$ and $\tilde{E}_{\hat{S}_{cb}}(m)$, the energy ratio is compared to a threshold $E_{thr}$.

In block 1109, the processing circuitry 1001 sets an output signal of the decoder 100 to the decoded primary signal or the post-filtered signal (formed by the post-filtering) based on the comparing of the decision variable to the threshold. For example, as described above, in some embodiments, the processing circuitry 1001 compares the decision variable in accordance with

$$D(m) = \begin{cases} active, & \dfrac{E_{S_f}(m)}{E_{\hat{S}_{cb}}(m)} < E_{thr} \\ inactive, & \dfrac{E_{S_f}(m)}{E_{\hat{S}_{cb}}(m)} \geq E_{thr} \end{cases}$$

In various embodiments of inventive concepts, the threshold energy $E_{thr}$ can be set to be a value of 1.

An example of setting the output signal is illustrated in Figure 13. Turning to Figure 13, the processing circuitry 1001 in block 1301 compares the energy ratio between an average energy of a step at subframe boundaries and an energy estimation of the at least a part of the frequency spectrum of the primary signal to a threshold.

In block 1303, responsive to the energy ratio between the average energy of the step at subframe boundaries and the energy estimation of the at least a part of the frequency spectrum of the primary signal being less than a threshold, the processing circuitry 1001 sets the output signal to be the post-filtered signal.

In block 1305, responsive to the energy ratio between the average energy of the step at subframe boundaries and the energy of the at least a part of the frequency spectrum of the primary signal being equal to the threshold or higher than the threshold, the processing circuitry 1001 sets the output signal to be the decoded primary signal.

In some embodiments of inventive concepts, hysteresis can be added for setting the output between the decoded primary signal and the post-filtered signal to reduce toggling if the energy ratio is hovering around the threshold.

Example embodiments are discussed below.

Explanations are provided below for various abbreviations/acronyms used in the present disclosure.

| Abbreviation | Explanation |
| --- | --- |
| BPF | Bass Post-Filter |
| DFT | Discrete Fourier Transform |
| MDCT | Modified Discrete Cosine Transform |
| EVS | Enhanced Voice Service |
| QMF | Quadrature Mirror Filterbank |

Additional explanation is provided below.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Further definitions and embodiments are discussed below.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" (abbreviated "/") includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

**Claims**

1. A method for audio decoding, where an encoded primary signal is decoded to form a decoded primary signal, followed by a post-filtering of the decoded primary signal to form a post-filtered signal, where an output signal of the decoder is one of the decoded primary signal and the post-filtered signal, the method comprising:

   obtaining (1101, 800) an energy estimation of at least a part of a frequency spectrum of the primary signal being reconstructed by the decoder;
   obtaining (1103, 820) an analysis of discontinuities in time domain that is caused by the post-filtering of the decoded primary signal;
   generating (1105, 830) a decision variable based on the energy estimation obtained and the analysis of discontinuities obtained;
   comparing (1107, 850) the decision variable to a threshold; and
   setting (1109) the output signal to be the decoded primary signal or the post-filtered signal based on the comparing of the decision variable to the threshold.

2. The method of Claim 1, wherein the primary signal reconstruction is done in frequency domain.

3. The method of Claim 2, wherein obtaining the energy estimation comprises summing edinergy coefficients of the at least a part of the frequency spectrum in the frequency domain.

4. The method of Claim 3, wherein obtaining the energy estimation comprises measuring an energy of a critical band of a reconstructed signal in accordance with

$$E_{\hat{S}_{cb}}(m) = \frac{1}{k_{end} - k_{start} + 1} \sum_{k=k_{start}}^{k_{end}} \left(\hat{S}(m,k)\right)^2$$

wherein $m$ is a frame number, $E_{\hat{S}_{cb}}(m)$ is an energy of a critical band of a reconstructed signal, $\hat{S}(m, k)$ is a reconstructed signal, and frequency bin limits $k_{start}$ and $k_{end}$ are set to match a frequency range of a critical band.

5. The method of Claim 4, further comprising applying a low-pass filter to the energy $E_{\hat{S}_{cb}}(m)$ of the critical band of the reconstructed signal in accordance with

$$\tilde{E}_{\hat{S}_{cb}}(m) = \gamma E_{\hat{S}_{cb}}(m) + (1 - \gamma)E_{\hat{S}_{cb}}(m - 1)$$

wherein $\gamma \in (0,1]$ and is a low-pass filtering coefficient which depends on a shape of modified discrete cosine transform, MDCT, synthesis windows and a length of an overlap.

6. The method of any of Claims 1-5, wherein obtaining the analysis of the discontinuities in time domain comprises measuring an average energy of a size of the discontinuities.

7. The method of Claim 6, wherein measuring the average energy of the size of the discontinuities comprises averaging a step at subframe boundaries of a filter difference signal $s_{diff}(m, n)$ in accordance with

$$\tilde{E}_{step}(m) = \frac{1}{N_{sf}} \sum_{i=1}^{N_{sf}} \left(s_{diff}(m, n_i) - s_{diff}(m, n_i - 1)\right)^2$$

wherein $m$ is a frame number, $i$ is a subframe number, $\tilde{E}_{step}(m)$ is an average energy of the step at the subframe boundaries, $N_{sf}$ is a number of subframes and $n_1, n_2, ..., n_{Nsf}$ are sample indices of the subframe boundaries marking the start of each subframe.

8. The method of any of Claims 1-7, wherein generating the decision variable comprises limiting (1201, 840) the decision variable to a maximum value.

9. The method of any of Claims 1-8 further comprising low-pass filtering (1203, 840) the decision variable.

**10.** The method of Claim 9, wherein generating the decision variable comprises generating the decision variable $\tilde{E}_{ratio,LP}(m)$ in accordance with

$$\tilde{E}_{ratio}(m) = \frac{\tilde{E}_{step}(m)}{\tilde{E}_{\hat{S}_{cb}}(m)}$$

$$\tilde{E}_{ratio,LP}(m) = \beta \tilde{E}_{ratio,1}(m) + (1-\beta)\tilde{E}_{ratio,LP}(m-1)$$

$$\tilde{E}_{ratio,1}(m) = \begin{cases} \tilde{E}_{ratio}(m), & \tilde{E}_{ratio}(m) \le E_{ratio,lim} \\ E_{ratio,lim}, & \tilde{E}_{ratio}(m) > E_{ratio,lim} \end{cases}$$

wherein $m$ is a frame number, $\tilde{E}_{ratio}(m)$ is an energy ratio between $\tilde{E}_{step}(m)$ and $\tilde{E}_{\hat{S}_{cb}}(m)$, $\tilde{E}_{step}(m)$ is an average energy of a step at subframe boundaries, $E_{\hat{S}_{cb}}(m)$ is a low-pass filtered energy $E_{\hat{S}_{cb}}(m)$ of a critical band of a reconstructed signal, $\beta \in (0,1]$ is a low-pass filtering coefficient, and $E_{ratio,lim}$ is an upper limit for the energy ratio.

**11.** The method of any of Claims 1-10, wherein setting the output signal to be the decoded primary signal or the post-filtered signal based on the comparing of the decision variable to the threshold comprises: responsive to an energy ratio between an average energy of a step at subframe boundaries and an energy estimation of the at least a part of the frequency spectrum of the primary signal being less than a threshold (1301), setting (1303) the output signal to the post-filtered signal; and responsive to the energy ratio between the average energy of the step at subframe boundaries and the energy of the at least a part of the frequency spectrum of the primary signal being equal to the threshold or higher than the threshold (1301), setting (1305) the output signal to the decoded primary signal.

**12.** The method of Claim 11, further comprising: providing hysteresis for the comparing of the decision variable to the threshold to prevent the output signal from being set back and forth between the primary signal and the post-filtered signal when the energy ratio goes above and below the threshold level in a specified period of time.

**13.** A decoder (100) adapted to perform operations comprising: obtaining (1101, 800) an energy estimation of at least a part of a frequency spectrum of a primary signal being reconstructed by the decoder to form a decoded primary signal; obtaining (1103, 820) an analysis of discontinuities in time domain that is caused by post-filtering of the decoded primary signal; generating (1105, 830) a decision variable based on the energy estimation obtained and the analysis of discontinuities obtained; comparing (1107, 850) the decision variable to a threshold; and setting (1109) the output signal to be the decoded primary signal or a post-filtered signal based on the comparing of the decision variable to the threshold.

**14.** The decoder (100) of Claim 13, wherein the decoder (100) is adapted to perform operations according to any of Claims 2-12.

**15.** A computer program comprising program code to be executed by processing circuitry (1001) of a decoder (100), whereby execution of the program code causes the decoder (100) to perform operations comprising: obtaining (1101, 800) an energy estimation of at least a part of a frequency spectrum of a primary signal being reconstructed by the decoder to form a decoded primary signal; obtaining (1103, 820) an analysis of discontinuities in time domain that is caused by post-filtering of the decoded primary signal; generating (1105, 830) a decision variable based on the energy estimation obtained and the analysis of discontinuities obtained; comparing (1107, 850) the decision variable to a threshold; and setting (1109) the output signal to be the primary signal decoded or a post-filtered signal based on the comparing of the decision variable to the threshold.

**Patentansprüche**

**1.** Verfahren zur Audiodecodierung, wobei ein codiertes Primärsignal decodiert wird, um ein decodiertes Primärsignal zu bilden, woraufhin ein Nachfiltern des decodierten Primärsignals folgt, um ein nachgefiltertes Signal zu bilden, wobei ein Ausgangssignal des Decoders eines von dem decodierten Primärsignal und dem nachgefilterten Signal ist, wobei das Verfahren umfasst:

Erhalten (1101, 800) einer Energieschätzung mindestens eines Teils eines Frequenzspektrums des Primärsignals, das vom Decoder rekonstruiert wird;

Erhalten (1103, 820) einer Analyse von Diskontinuitäten in der Zeitdomäne, die durch das Nachfiltern des decodierten Primärsignals verursacht werden;

Erzeugen (1105, 830) einer Entscheidungsvariablen basierend auf der erhaltenen Energieschätzung und der erhaltenen Analyse von Diskontinuitäten;

Vergleichen (1107, 850) der Entscheidungsvariablen mit einem Schwellenwert; und

Festlegen (1109) des Ausgangssignals als das decodierte Primärsignal oder das nachgefilterte Signal basierend auf dem Vergleich der Entscheidungsvariablen mit dem Schwellenwert.

2. Verfahren nach Anspruch 1, wobei die Primärsignalrekonstruktion in der Frequenzdomäne erfolgt.

3. Verfahren nach Anspruch 2, wobei das Erhalten der Energieschätzung ein Summieren von Energiekoeffizienten des mindestens einen Teils des Frequenzspektrums in der Frequenzdomäne umfasst.

4. Verfahren nach Anspruch 3, wobei das Erhalten der Energieschätzung ein Messen einer Energie eines kritischen Bandes eines rekonstruierten Signals umfasst gemäß

$$E_{\hat{S}_{cb}}(m) = \frac{1}{k_{end} - k_{start} + 1} \sum_{k_{start}}^{k_{end}} \left(\hat{S}(m, k)\right)^2$$

wobei m eine Rahmennummer ist, $E_{\hat{S}_{cb}}(m)$ eine Energie eines kritischen Bandes eines rekonstruierten Signals ist, $\hat{S}(m, k)$ ein rekonstruiertes Signal ist und Frequenzbin-Grenzen $k_{start}$ und $k_{end}$ so festgelegt werden, dass sie mit einem Frequenzbereich eines kritischen Bandes übereinstimmen.

5. Verfahren nach Anspruch 4, ferner umfassend ein Anwenden eines Tiefpassfilters auf die Energie $E_{\hat{S}_{cb}}(m)$ des kritischen Bandes des rekonstruierten Signals gemäß

$$E_{\hat{S}_{cb}}(m) = \gamma E_{\hat{S}_{cb}}(m) + (1 - \gamma) E_{\hat{S}_{cb}}(m - 1)$$

wobei $\gamma \in (0,1]$ und ein Tiefpassfilterkoeffizient ist, der von einer Form von Synthesefenstern einer modifizierten diskreten Cosinustransformation, MDCT, und einer Länge einer Überlappung abhängt.

6. Verfahren nach einem der Ansprüche 1 bis 5, wobei das Erhalten der Analyse der Diskontinuitäten in der Zeitdomäne ein Messen einer mittleren Energie einer Größe der Diskontinuitäten umfasst.

7. Verfahren nach Anspruch 6, wobei das Messen der mittleren Energie der Größe der Diskontinuitäten ein Mitteln eines Schritts an Unterrahmengrenzen eines Filterdifferenzsignals $s_{diff}(m, n)$ umfasst gemäß

$$\tilde{E}_{step}(m) = \frac{1}{N_{sf}} \sum_{i=1}^{N_{sf}} \left(s_{diff}(m, n_i) - s_{diff}(m, n_i - 1)\right)^2$$

wobei m eine Rahmennummer ist, $i$ eine Unterrahmennummer ist, $\tilde{E}_{step}(m)$ eine mittlere Energie des Schritts an den Unterrahmengrenzen ist, $N_{sf}$ eine Anzahl von Unterrahmen ist und $n_1, n_2, ..., n_{N_{sf}}$ Abtastwertindizes der Unterrahmengrenzen sind, die den Beginn jedes Unterrahmens markieren.

8. Verfahren nach einem der Ansprüche 1 bis 7, wobei das Erzeugen der Entscheidungsvariablen ein Begrenzen (1201, 840) der Entscheidungsvariablen auf einen maximalen Wert umfasst.

9. Verfahren nach einem der Ansprüche 1 bis 8, ferner umfassend ein Tiefpassfiltern (1203, 840) der Entscheidungsvariablen.

10. Verfahren nach Anspruch 9, wobei das Erzeugen der Entscheidungsvariablen ein Erzeugen der Entscheidungsvariablen $\tilde{E}_{ratio,LP}(m)$ umfasst gemäß

$$\tilde{E}_{ratio}(m) = \frac{\tilde{E}_{step}(m)}{\tilde{E}_{\hat{S}_{cb}}(m)}$$

$$\tilde{E}_{ratio,LP}(m) = \beta \tilde{E}_{ratio,1}(m) + (1 - \beta)\tilde{E}_{ratio,LP}(m - 1)$$

$$\tilde{E}_{ratio,1}(m) = \begin{cases} \tilde{E}_{ratio}(m), \tilde{E}_{ratio}(m) \leq \tilde{E}_{ratio,lim} \\ \tilde{E}_{ratio,lim}, \tilde{E}_{ratio}(m) > \tilde{E}_{ratio,lim} \end{cases}$$

wobei m eine Rahmennummer ist, $\tilde{E}_{ratio}(m)$ ein Energieverhältnis zwischen $\tilde{E}_{step}(m)$ und $\tilde{E}_{\hat{S}_{cb}}(m)$ ist, $\tilde{E}_{step}(m)$ eine mittlere Energie eines Schritts an den Unterrahmengrenzen ist, $\tilde{E}_{\hat{S}_{cb}}(m)$ eine tiefpassgefilterte Energie $E_{\hat{S}_{cb}}(m)$ eines kritischen Bandes eines rekonstruierten Signals ist, $\beta \in (0,1]$ ein Tiefpassfilterkoeffizient ist und $\tilde{E}_{ratio,lim}$ eine Obergrenze für das Energieverhältnis ist.

11. Verfahren nach einem der Ansprüche 1 bis 10, wobei das Festlegen des Ausgangssignals als das decodierte Primärsignal oder das nachgefilterte Signal basierend auf dem Vergleich der Entscheidungsvariablen mit dem Schwellenwert umfasst: in Reaktion darauf, dass ein Energieverhältnis zwischen einer mittleren Energie eines Schritts an den Unterrahmengrenzen und einer Energieschätzung des mindestens einen Teils des Frequenzspektrums des Primärsignals unter einem Schwellenwert liegt (1301), Festlegen (1303) des Ausgangssignals als das nachgefilterte Signal; und in Reaktion darauf, dass das Energieverhältnis zwischen der mittleren Energie des Schritts an den Unterrahmengrenzen und der Energie des mindestens einen Teils des Frequenzspektrums des Primärsignals gleich dem Schwellenwert ist oder über dem Schwellenwert liegt (1301), Festlegen (1305) des Ausgangssignals als das decodierte Primärsignal.

12. Verfahren nach Anspruch 11, ferner umfassend: Bereitstellen einer Hysterese zum Vergleichen der Entscheidungsvariablen mit dem Schwellenwert, um zu verhindern, dass das Ausgangssignal zwischen dem Primärsignal und dem nachgefilterten Signal hin- und hergeschaltet wird, wenn das Energieverhältnis in einem spezifizierten Zeitraum über oder unter den Schwellenpegel fällt.

13. Decoder (100), der zum Durchführen von Operationen ausgelegt ist, die umfassen: Erhalten (1101, 800) einer Energieschätzung mindestens eines Teils eines Frequenzspektrums des Primärsignals, das vom Decoder rekonstruiert wird; Erhalten (1103, 820) einer Analyse von Diskontinuitäten in der Zeitdomäne, die durch das Nachfiltern des decodierten Primärsignals verursacht werden; Erzeugen (1105, 830) einer Entscheidungsvariablen basierend auf der erhaltenen Energieschätzung und der erhaltenen Analyse von Diskontinuitäten; Vergleichen (1107, 850) der Entscheidungsvariablen mit einem Schwellenwert; und Festlegen (1109) des Ausgangssignals als das decodierte Primärsignal oder das nachgefilterte Signal basierend auf dem Vergleich der Entscheidungsvariablen mit dem Schwellenwert.

14. Decoder (100) nach Anspruch 13, wobei der Decoder (100) zum Durchführen von Operationen nach einem der Ansprüche 2 bis 12 ausgelegt ist.

15. Computerprogramm, umfassend Programmcode, der von Verarbeitungsschaltungsanordnung (1001) eines Decoders (100) auszuführen ist, wobei die Ausführung des Programmcodes den Decoder (100) zum Durchführen von Operationen veranlasst, die umfassen: Erhalten (1101, 800) einer Energieschätzung mindestens eines Teils eines Frequenzspektrums des Primärsignals, das vom Decoder rekonstruiert wird; Erhalten (1103, 820) einer Analyse von Diskontinuitäten in der Zeitdomäne, die durch das Nachfiltern des decodierten Primärsignals verursacht werden; Erzeugen (1105, 830) einer Entscheidungsvariablen basierend auf der erhaltenen Energieschätzung und der erhaltenen Analyse von Diskontinuitäten; Vergleichen (1107, 850) der Entscheidungsvariablen mit einem Schwellenwert; und Festlegen (1109) des Ausgangssignals als das decodierte Primärsignal oder das nachgefilterte Signal basierend auf dem Vergleich der Entscheidungsvariablen mit dem Schwellenwert.

**Revendications**

1. Procédé de décodage audio, dans lequel un signal primaire codé est décodé pour former un signal primaire décodé, puis le signal primaire décodé est post-filtré pour former un signal post-filtré, dans lequel un signal de sortie du décodeur est l'un parmi le signal primaire décodé et le signal post-filtré, le procédé comprenant :

l'obtention (1101, 800) d'une estimation d'énergie d'au moins une partie d'un spectre de fréquence du signal primaire qui est reconstruit par le décodeur ;

l'obtention (1103, 820) d'une analyse de discontinuités dans le domaine temporel qui est provoquée par le post-filtrage du signal primaire décodé ;

la génération (1105, 830) d'une variable de décision sur la base de l'estimation d'énergie obtenue et de l'analyse de discontinuités obtenue ;

la comparaison (1107, 850) de la variable de décision à un seuil ; et

la définition (1109) du signal de sortie pour qu'il soit le signal primaire décodé ou le signal post-filtré sur la base de la comparaison de la variable de décision au seuil.

2. Procédé selon la revendication 1, dans lequel la reconstruction de signal primaire est effectuée dans le domaine fréquentiel.

3. Procédé selon la revendication 2, dans lequel l'obtention de l'estimation d'énergie comprend la somme de coefficients d'énergie de l'au moins une partie du spectre de fréquence dans le domaine fréquentiel.

4. Procédé selon la revendication 3, dans lequel l'obtention de l'estimation d'énergie comprend la mesure d'une énergie d'une bande critique d'un signal reconstruit selon

$$E_{\hat{S}_{cb}}(m) = \frac{1}{k_{fin} - k_{début} + 1} \sum_{k=k_{début}}^{k_{fin}} \left( \hat{S}(m, k) \right)^2$$

dans lequel m est un numéro de trame, $E_{\hat{S}_{cb}}(m)$ est une énergie d'une bande critique d'un signal reconstruit, $\hat{S}(m, k)$ est un signal reconstruit, et des limites de segment de fréquence $k_{début}$ et $k_{fin}$ sont définies pour correspondre à une plage de fréquence d'une bande critique.

5. Procédé selon la revendication 4, comprenant en outre l'application d'un filtre passe-bas à l'énergie $\tilde{E}_{\hat{S}_{cb}}(m)$ de la bande critique du signal reconstruit selon

$$\tilde{E}_{\hat{S}_{cb}}(m) = \gamma E_{\hat{S}_{cb}}(m) + (1 - \gamma) E_{\hat{S}_{cb}}(m - 1)$$

dans lequel $\gamma \in (0,1]$ et est un coefficient de filtrage passe-bas qui dépend d'une forme de fenêtres de synthèse de transformée cosinusoïdale discrète modifiée, MDCT, et d'une longueur d'un chevauchement.

6. Procédé selon l'une quelconque des revendications 1 à 5, dans lequel l'obtention de l'analyse des discontinuités dans le domaine temporel comprend la mesure d'une énergie moyenne d'une taille des discontinuités.

7. Procédé selon la revendication 6, dans lequel la mesure de l'énergie moyenne de la taille des discontinuités comprend la moyenne d'un pas au niveau de frontières de sous-trame d'un signal de différence de filtre $s_{diff}(m, n)$ selon

$$\tilde{E}_{pas}(m) = \frac{1}{N_{sf}} \sum_{i=1}^{N_{sf}} \left( s_{diff}(m, n_i) - s_{diff}(m, n_i - 1) \right)^2$$

dans lequel m est un numéro de trame, $i$ est un numéro de sous-trame, $\tilde{E}_{pas}(m)$ est une énergie moyenne du pas au niveau des frontières de sous-trame, $N_{sf}$ est un nombre de sous-trames et $n_1$, $n_2$, ..., $n_{Nsf}$ sont des indices d'échantillon des frontières de sous-trame marquant le début de chaque sous-trame.

8. Procédé selon l'une quelconque des revendications 1 à 7, dans lequel la génération de la variable de décision comprend la limitation (1201, 840) de la variable de décision à une valeur maximale.

9. Procédé selon l'une quelconque des revendications 1 à 8, comprenant en outre le filtrage passe-bas (1203, 840) de la variable de décision.

10. Procédé selon la revendication 9, dans lequel la génération de la variable de décision comprend la génération de la variable de décision $\tilde{E}_{rapport,LP}(m)$ selon

$$\tilde{E}_{rapport}(m) = \frac{\tilde{E}_{pas}(m)}{\tilde{E}_{\hat{S}_{cb}}(m)}$$

$$\tilde{E}_{rapport,LP}(m) = \beta\tilde{E}_{rapport,1}(m) + (1-\beta)\tilde{E}_{rapport,LP}(m-1)$$

$$\tilde{E}_{rapport,1}(m) = \begin{cases} \tilde{E}_{rapport}(m), & \tilde{E}_{rapport}(m) \leq \tilde{E}_{rapport,lim} \\ \tilde{E}_{rapport,lim}, & \tilde{E}_{rapport}(m) > \tilde{E}_{rapport,lim} \end{cases}$$

dans lequel m est un numéro de trame, $\tilde{E}_{rapport}(m)$ est un rapport d'énergie entre $\tilde{E}_{pas}(m)$ et $\tilde{E}_{\hat{S}_{cb}}(m)$, $\tilde{E}_{pas}(m)$ est une énergie moyenne d'un pas au niveau de frontières de sous-trame, $\tilde{E}_{\hat{S}_{cb}}(m)$ est une énergie filtrée passe-bas $\tilde{E}_{\hat{S}_{cb}}(m)$ d'une bande critique d'un signal reconstruit, $\beta \in (0,1]$ est un coefficient de filtrage passe-bas, et $E_{rapport,lim}$ est une limite supérieure pour le rapport d'énergie.

11. Procédé selon l'une quelconque des revendications 1 à 10, dans lequel la définition du signal de sortie pour qu'il soit le signal primaire décodé ou le signal post-filtré sur la base de la comparaison de la variable de décision au seuil comprend : en réponse au fait qu'un rapport d'énergie entre une énergie moyenne d'un pas à des frontières de sous-trame et une estimation d'énergie de l'au moins une partie du spectre de fréquence du signal primaire est inférieur à un seuil (1301), la définition (1303) que le signal de sortie est le signal post-filtré ; et, en réponse au fait que le rapport d'énergie entre l'énergie moyenne du pas à des frontières de sous-trame et l'énergie de l'au moins une partie du spectre de fréquence du signal primaire est supérieur ou égal au seuil (1301), la définition (1305) que le signal de sortie est le signal primaire décodé.

12. Procédé selon la revendication 11, comprenant en outre : la fourniture d'une hystérésis pour la comparaison de la variable de décision au seuil pour empêcher la définition en va-et-vient du signal de sortie entre le signal primaire et le signal post-filtré lorsque le rapport d'énergie devient supérieur et inférieur au niveau de seuil dans une période de temps spécifiée.

13. Décodeur (100) adapté pour réaliser des opérations comprenant : l'obtention (1101, 800) d'une estimation d'énergie d'au moins une partie d'un spectre de fréquence d'un signal primaire qui est reconstruit par le décodeur pour former un signal primaire décodé ; l'obtention (1103, 820) d'une analyse de discontinuités dans le domaine temporel qui est provoquée par le post-filtrage du signal primaire décodé ; la génération (1105, 830) d'une variable de décision sur la base de l'estimation d'énergie obtenue et de l'analyse de discontinuités obtenue ; la comparaison (1107, 850) de la variable de décision à un seuil ; et la définition (1109) du signal de sortie pour qu'il soit le signal primaire décodé ou un signal post-filtré sur la base de la comparaison de la variable de décision au seuil.

14. Décodeur (100) selon la revendication 13, dans lequel le décodeur (100) est adapté pour réaliser des opérations selon l'une quelconque des revendications 2 à 12.

15. Programme informatique comprenant un code de programme à exécuter par une circuiterie de traitement (1001) d'un décodeur (100), de telle manière qu'une exécution du code de programme amène le décodeur (100) à réaliser des opérations comprenant : l'obtention (1101, 800) d'une estimation d'énergie d'au moins une partie d'un spectre de fréquence d'un signal primaire qui est reconstruit par le décodeur pour former un signal primaire décodé ; l'obtention (1103, 820) d'une analyse de discontinuités dans le domaine temporel qui est provoquée par le post-filtrage du signal primaire décodé ; la génération (1105, 830) d'une variable de décision sur la base de l'estimation d'énergie obtenue et de l'analyse de discontinuités obtenue ; la comparaison (1107, 850) de la variable de décision à un seuil ; et la définition (1109) du signal de sortie pour qu'il soit le signal primaire décodé ou un signal post-filtré sur la base de la comparaison de la variable de décision au seuil.

Figure 1

**Figure 2**

Figure 3

EP 4 139 919 B1

Figure 4

EP 4 139 919 B1

```
                                        ┌─────────────────────────────────────────────────────────┐
                                        │ PROCESSING BLOCK              530                        │
                                        │                                                         │
┌──────────┐      ┌──────────┐  ŝ(m,k) │  ┌────────┐  ŝ(m,n)   ┌──────────────────┐               │
│ BITSTREAM│─────▶│ DECODER  │─────────┼─▶│ IMDCT  │──────────▶│                  │               │
│   510    │      │   520    │         │  └────────┘           │                  │  ŝ_f(m,n)     │
└──────────┘      └──────────┘         │                       │ PITCH POST-FILTER│───────────▶   │
                                       │      T ───────────────▶│                  │               │
                                       │                       │                  │               │
                                       │                       └──────────────────┘               │
                                       └─────────────────────────────────────────────────────────┘
```

**Figure 5**

Figure 6

Figure 7

EP 4 139 919 B1

MEASURE ENERGY IN CRITICAL BAND IN FREQUENCY DOMAIN
800

LOW PASS FILTER MEASURED ENERGY
810

MEASURE ENERGY OF STEPS AT SUBFRAME BOUNDARIES OF THE
POST-FILTER DIFFERENCE SIGNAL
820

FORM DECISION VARIABLE
830

LOW PASS FILTER THE DECISION VARIABLE
OR
LIMIT THE DECISION VARIABLE USING AN UPPER LIMIT THRESHOLD
AND LOW PASS FILTER
840

COMPARE THE DECISION VARIABLE TO THRESHOLD
850

DECIDE WHETHER OR NOT TO USE POST-FILTER
860

**Figure 8**

EP 4 139 919 B1

ALTERNATIVE ADAPTIVE POST-FILTER BLOCK

900

620          650

PF
ADAPTOR
640

INPUT SIGNAL
IN MDCT
DOMAIN

902

IMDCT          PF          ADAPTIVE
FILTER OUTPUT
SIGNAL

660

904

PITCH PERIOD

**Figure 9**

Decoder
100

Network
Interface
1005

Processor
1001

Memory
1003

Figure 10

Obtaining an energy estimation of at least a part
of a frequency spectrum of a primary signal
being decoded by the decoder
1101

Obtaining an analysis of discontinuities in time
domain that is caused by post-filtering of the
decoded primary signal
1103

Generating a decision variable based on the
energy estimation obtained and the analysis of
discontinuities obtained
1105

Comparing the decision variable to a threshold
1107

Setting the output signal to be the decoded
primary signal or the post-filtered signal based
on the comparing of the decision variable to the
threshold
1109

Figure 11

Limiting the decision variable to a maximum value
1201

Low pass filtering the decision variable
1203

Figure 12

Energy ratio
<
threshold?
1301

No

Yes

Setting the output signal to the post-filtered signal
1303

Setting the output signal to the decoded primary signal
1305

Figure 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9224403 B
- US 2019214035 A1
- US 2012101824 A1
- US 9224403 B2

**Non-patent literature cited in the description**

- **H. CHIBA et al.** Adaptive Post-Filtering Controlled by Pitch Frequency for CELP-based Speech Coder. *2014 48th Asilomar Conference on Signals, Systems and Computers*